# EUROPEAN PATENT APPLICATION

(11) **EP 3 410 775 A1**
(43) Date of publication of application: **05.12.2018**
(21) Application number: 17174202.6
(22) Date of filing: 02.06.2017
(51) Int. Cl.: H04W 28/24

(54) **COMMUNICATION TERMINAL AND METHOD FOR ESTABLISHING A CONNECTION**

(71) Applicant: Intel IP Corporation, Santa Clara, CA 95054 (US)
(72) Inventor: BISS, Kristian, 91220 Schnaittach (DE)
(74) Representative: Viering, Jentschura & Partner mbB Patent- und Rechtsanwälte

(57) **Abstract**

A communication terminal is provided comprising a communication subsystem comprising a baseband processor and an RF transceiver and a controller configured to control the communication subsystem to transmit a request for a first establishment of a connection to a mobile radio communication network and to transmit a first capability message to the mobile radio communication network and configured, based on whether the first establishment of a connection has failed, to control the communication subsystem to transmit a request for a second establishment of a connection to the mobile radio communication network and to transmit a second capability message to the mobile radio communication network wherein the second capability message is smaller than the first capability message.

## Description

### Technical Field

Exemplary implementations described herein generally relate to communication terminals and methods for establishing a connection.

### Background

In course of an attach procedure for attaching to a mobile communication network, e.g. an LTE (Long Term Evolution) mobile communication network, a communication terminal typically has to indicate its capabilities such as supported band combinations and features to the mobile communication network. However, it may occur that the capability message is not successfully received by the network and the network therefore aborts the attach procedure without notifying the communication terminal about the reason for the abort. Approaches are desirable allowing a communication terminal to perform a successful network attach in such a scenario.

### Brief Description of the Drawings

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
Figure 1 shows a communication system, e.g. an LTE (Long Term Evolution) communication system.
Figure 2 shows a message flow diagram illustrating an attach procedure according to LTE.
Figure 3 shows a flow diagram illustrating an approach for addressing a connection release after UE (User Equipment) capability enquire according to an example.
Figure 4 shows an example of a UE capability response message.
Figure 5 shows an UE capability RAT (Radio Access Technology) container.
Figure 6 shows a communication terminal.
Figure 7 shows a flow diagram illustrating a method for establishing a connection, for example carried out by a communication terminal.

### Description of Exemplary Implementations

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

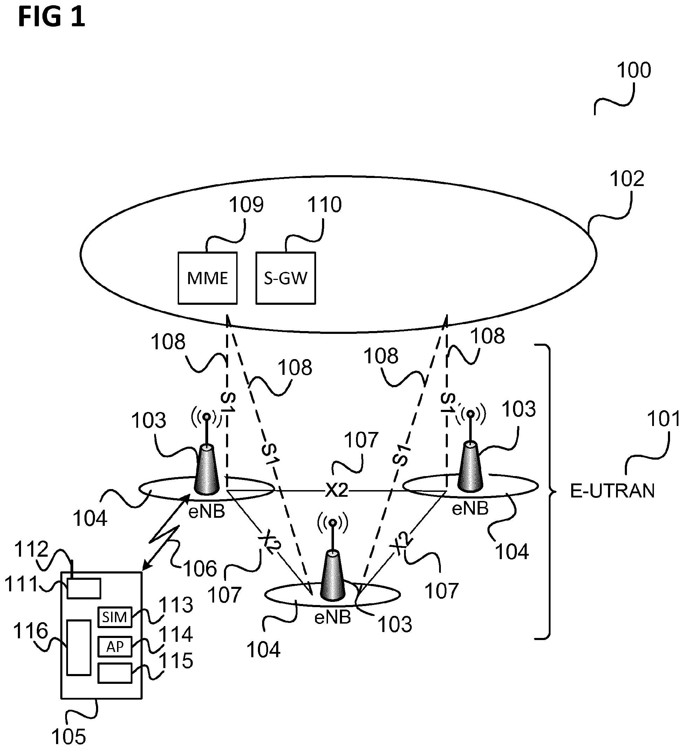

Figure 1 shows a communication system 100, e.g. an LTE (Long Term Evolution) communication system.

The communication system 100 includes a radio access network (e.g. an E-UTRAN, Evolved UMTS (Universal Mobile Communications System) Terrestrial Radio Access Network according to LTE) 101 and a core network (e.g. an EPC, Evolved Packet Core, according LTE) 102. The radio access network 101 may include base (transceiver) stations (e.g. eNodeBs, eNBs, according to LTE) 103. Each base station 103 provides radio coverage for one or more mobile radio cells 104 of the radio access network 101.

A mobile terminal (also referred to as UE, user equipment, or MS, mobile station) 105 located in a mobile radio cell 104 may communicate with the core network 102 and with other mobile terminals 105 via the base station providing coverage in (in other words operating) the mobile radio cell.

Control and user data are transmitted between a base station 103 and a mobile terminal 105 located in the mobile radio cell 104 operated by the base station 103 over the air interface 106 on the basis of a multiple access method.

The base stations 103 are interconnected with each other by means of a first interface 107, e.g. an X2 interface. The base stations 103 are also connected by means of a second interface 108, e.g. an S1 interface, to the core network, e.g. to an MME (Mobility Management Entity) 109 and a Serving Gateway (S-GW) 110. For example, the MME 109 is responsible for controlling the mobility of mobile terminals located in the coverage area of E-UTRAN, while the S-GW 110 is responsible for handling the transmission of user data between mobile terminals 105 and core network 102.

The radio access network 101 and the core network 102 may support communication according to various communication technologies, e.g. mobile communication standards. For example, each base station 103 may provide a radio communication connection via the air interface between itself and the mobile terminal 105 according to LTE, UMTS, GSM (Global System for Mobile Communications), EDGE (Enhanced Data Rates for GSM Evolution) radio access. Accordingly, the radio access network 102 may operate as an E-UTRAN, a UTRAN, a GSM radio access network, or a GERAN (GSM EDGE Radio Access Network). Analogously, the core network 102 may include the functionality of an EPC, a UMTS core network or a GSM core network.

For radio communication via the air interface 106, the mobile terminal 105 includes a radio transceiver 111 and one or more antennas 112 and one or more multiple subscriber identity modules 113. The mobile terminal 105 also includes an application processor 114 as well as a main memory 115 for running applications. The mobile terminal 105 further includes a battery 116 for power supply. The mobile terminal 105 may include further components such as a display, a speaker, a microphone etc.

The LTE UE architecture data plane processing is divided in physical layer, protocol stack layer and application layer, e.g. according to the OSI (Open System Interconnection) reference model, wherein the protocol stack layer for example include communication layers between the physical layer and the application layer such as the data link layer, the network layer and the transport layer, e.g. the MAC (Medium Access Control) layer and the RRC (Radio Resource Control) layer in case of LTE.

According to LTE, a mobile terminal 105 (UE) needs to register with the network (i.e. the core network 102) to receive services that require registration. This registration is called Network attachment. The always on IP connectivity for UE is enabled by establishing a default EPS bearer during Network attachment procedure. The attach procedure may trigger one or multiple Dedicated Bearer Establishment procedures to establish a dedicated EPS bearer for the UE 105. During the initial attach procedure the network obtains the Mobile Equipment Identity from the UE. The MME operator may check the Mobile Equipment (ME) Identity with an EIR (Equipment Identity Register). At least in roaming situations, the MME should pass the ME Identity to an HSS (Home Subscriber Server).

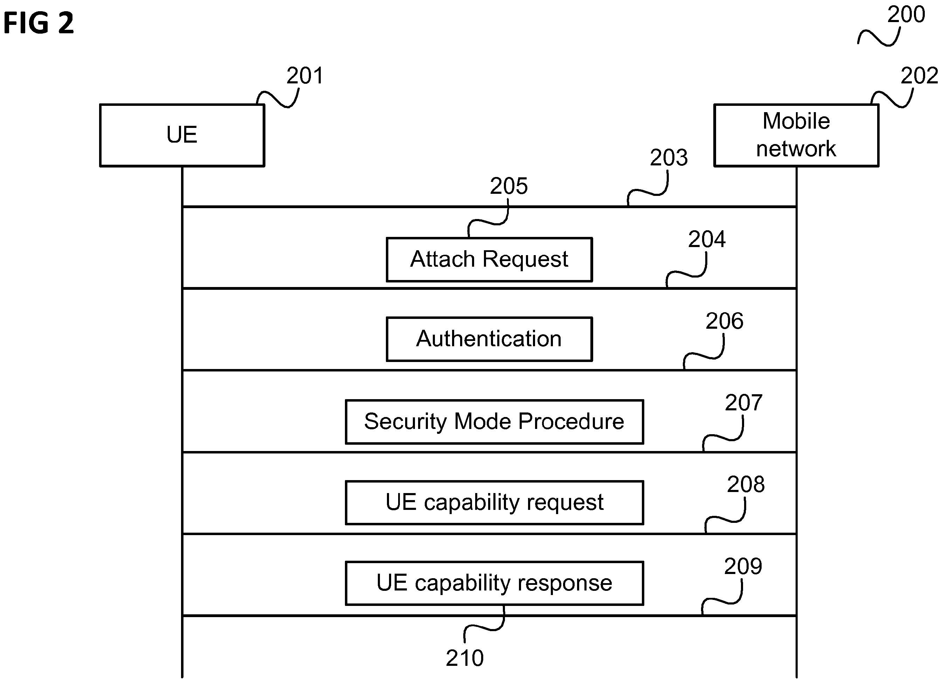

Figure 2 shows a message flow diagram 200 illustrating an attach procedure according to LTE (up to UE capability exchange).

The message flow takes place between a UE 201 (e.g. corresponding to mobile terminal 105) and a mobile communication network 202 (e.g. with E-UTRAN 101).

In 203, the UE 201 performs an RRC (Radio Resource Control) Establishment with the mobile communication network 202, e.g. an eNobeB 103, to establish an RRC connection.

In 204, the UE 201 sends an (Non-Access Stratum (NAS)) attach Request 205 to the mobile communication network 202. The UE 201 for example sends the attach Request to an eNobeB 103 which forwards the attach Request 204 to an MME 109.

In 206, the UE 201 and the mobile communication network 202 perform an authentication procedure followed by, in 207, a Security Mode Procedure such that after this, both the UE 201 and the mobile communication network 202 encrypt NAS messages while sending and decrypt them while receiving.

In 208, the mobile communication network 202 requests information about the UE capabilities from the UE 201.

In 209, the UE 201 response to the request of 207 by sending an UE capability message 210 to the mobile communication network.

It may now occur that the network 202 releases the RRC connection after requesting the UE capabilities.

In case the network 202 releases the RRC connection during the attach procedure after requesting the UE capabilities, the reason for the release is typically unclear to the UE 201. The release of the RRC connection (and thus abort of the attach procedure) can be either due to the UE capability message size, i.e. the UE capability message 210 being too large, or not supported release, i.e. the UE capability message size includes information elements (IEs) according to a release (i.e. release of the corresponding mobile communication standard, e.g. 3GPP standard) which is not supported by the mobile communication network 202. A cause for the release of the RRC connection may also be that the network does not provide enough resources to transmit complete message.

For example, in case the mobile communication network does not provide a sufficient UL (Uplink) grant for communication resources to allow the UE 201 to transmit the UE capability message within a certain time (e.g. two seconds) it may release the RRC connection. The UE can influence the network to provide more grant by adapting the buffer status reporting, e.g. by sending the buffer status report (BSR) more often or request higher grant.

In case the network 202 has problems to accept the UE capability message size, one of the following approaches (or combinations thereof) may for example be used:
- Use a PLMN based lookup table to limit the UE capability message size to a defined (network specific) threshold;
- Use a PLMN based lookup table to support only limited number of bands which are typically supported in the region in which the UE 201 is located;
- Prioritize certain band combinations and only include this to the UE capability message;
- Adapt the size by learning based on a dynamic approach.

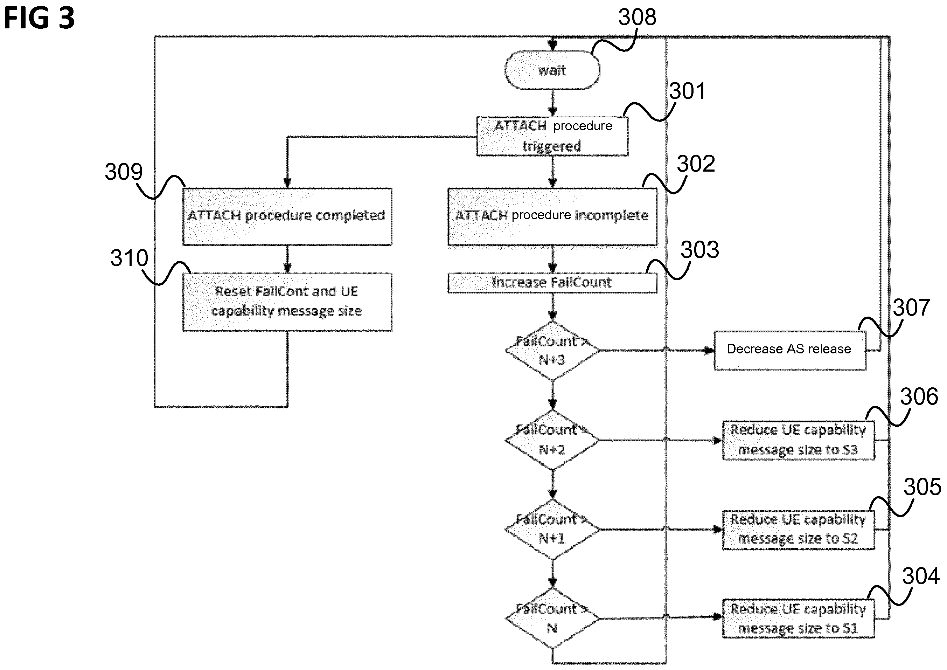

Figure 3 shows a flow diagram 300 illustrating an approach for addressing connection release after UE capability enquire according to an example.

According to the example of figure 3, the UE 201 detects the case of attach procedure not being completed, i.e. that the RRC connection has been released during the attach procedure (and in particular before the mobile communication network has sent an attach accept message to the UE 201). If this happens N times consecutively, the UE 201 itself reduces the UE capability message to a size S1. If the next attach procedure is again incomplete, the UE 201 reduces the size to S2. The UE repeats this repeated until a size ST (e.g. T=3) has been reached. If the UE 201 is then still not accepted, the UE 201 downgrades the Access Stratum Release of the UE Capability message. For example, the UE 201 may modify the UE capability message to be in accordance with a lower release, e.g. one release earlier (e.g. 3GPP Rel-12 instead of 3GPP Rel-13).

Specifically, in the example of figure 3, in 301, the UE 201 triggers the attach procedure (e.g. as explained with reference to figure 2 by means of an RRC connection establishment). As explained with reference to figure 2, in course of the attach procedure, the UE receives an UE capability request (or UE capability enquiry).

Assuming that in 302, the UE 201 detects that the attach procedure is incomplete (i.e. the RRC connection has been released without the attach procedure being complete) after sending a UE capability message in response to the UE capability request, the UE 201 increases a fail counter by one. The increase of the fail counter may also depend on whether the RRC connection has been released after a certain period (e.g. two seconds) after transmission of the UE capability request which hints that the cause for the RRC connection release was due to an unsuccessful transmission of the UE capability message. For example, if the attach procedure is not successfully completed due to another reason (e.g. after the capability message has been successfully transmitted) the fail counter is not increased.

If, after 303, the fail counter is higher than a value N (wherein N may for example be 0, 1 or 2) the UE 201 reduces the size of the UE capability message to a size S1 in 304. If, after 303, the fail counter is higher than N+ 1 the UE 201 reduces the size of the UE capability message to a size S2 in 305. If, after 303, the fail counter is higher than N+2 the UE 201 reduces the size of the UE capability message to a size S3 in 306. If, after 303, the fail counter is even higher than N+3 the UE 201 reduces the standard release according to which the UE capability message is formed or, in other words, downgrades the UE capability message to an earlier version of the applicable communication standard in 307.

After 304, 305, 306 or 307 or after 303 if the fail counter is equal to N or lower, the UE 201 may introduce a waiting period in 308 before again triggering the attach procedure in 301. If the attach procedure now succeeds in 309, the UE 201 resets the fail counter to zero, resets the UE capability message size (e.g. to a full size S0) in 310 and resets the UE capability message version.

The approach of figure 3 may be implemented to operate without user interaction and e.g. trace analysis and updating specific test settings or non-volatile memory settings for the network.

The approach of figure 3 may be used in addition to BSR timer reduction (sending BSR more often).

In case the network temporarily grants insufficient uplink resources for the transmission of the UE capability message (before the network's timer for receiving the UE capability message expires and the network releases the RRC connection), the UE has a chance to transmit the UE capability message (with reduced size) and can later transmit the full size UE capability message.

Furthermore, the approach of figure 3 includes an AS (Access Stratum) release downgrade to address attach failure in case the network does not support the release of the UE capability message (e.g. does not support higher release UE capability IEs).

The size reduction and the (version or release) downgrade of a capability message is in the following explained in more detail with reference to an example of a UE capability response message.

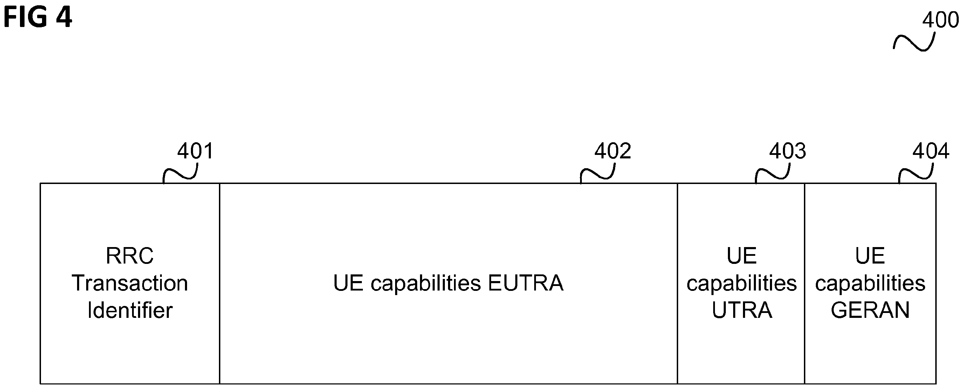

Figure 4 shows an example of a UE capability response message 400.

The UE capability response message 400 is a UL-DCCH message (Uplink Dedicated Control Channel Message), e.g. corresponding to the UE capability response 210 of figure 2 which the UE 201 sends to the mobile network 202.

The UE capability response message 400 includes an RRC (Radio Resource Control) Transaction ID 401 which allows the sender (UE) to correlate the response with the original request (i.e. the corresponding UE capability request). Then, the UE capability response message 400 includes UE capability RAT containers 402, 403, 404 for the supported RATs, in this example a first UE capability RAT container 402 for EUTRA (evolved UMTS Terrestrial Radio Access, i.e. for LTE), a second UE capability RAT container 403 for UTRA (UMTS Terrestrial Radio Access, i.e. for UMTS) and a third UE capability RAT container 404 for GERAN (GSM EDGE Radio Access Network, i.e. for GSM).

It should be noted that the network can indicate which RAT container shall be transmitted (e.g. according to 3GPP in terms of an enumerated list such as "eutra, utra, gerancs, geran-ps, cdma2000-1XRTT"). The example of figure 4 can be seen to relate to the use case that all RATs shall be reported.

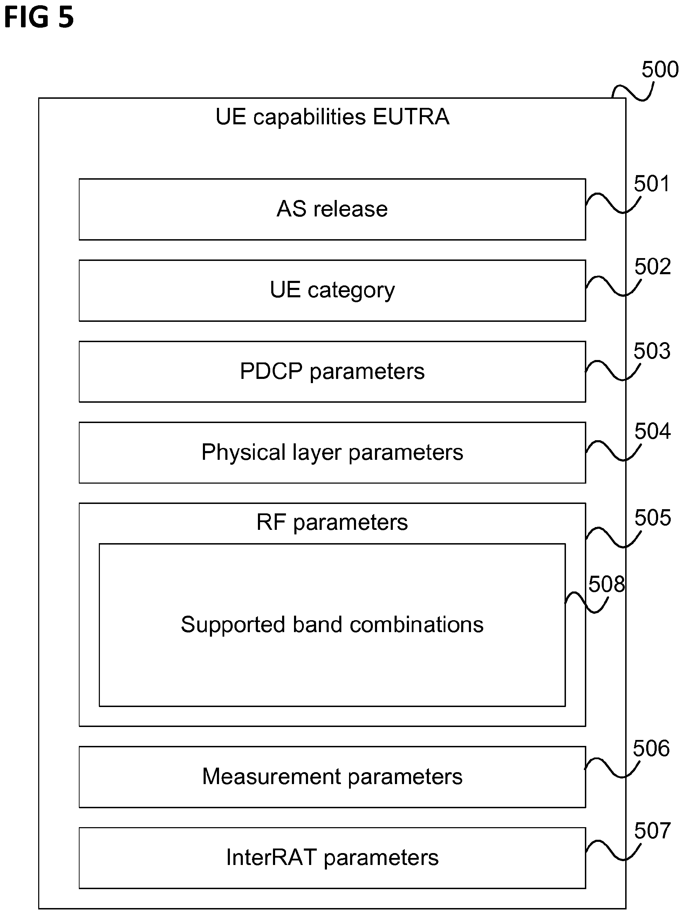

Among the UE capability RAT containers 402, 403, 404, the first UE capability RAT container 401 typically has the largest size and is shown in more detail in figure 5.

Figure 5 shows an UE capability RAT container 500.

The UE capability RAT container 500 includes information about various parameters such as the access stratum release used by the UE 501, a UE category 502, PDCP-Parameters 503, physical layer parameters 504, RF parameters 505, measurement parameters 506 and interRAT parameters 507. As largest part, it includes a list of supported band combinations 508 as part of the RF parameters 505.

As an example, the message 400 may have a size of about 1900 byte, the first capability RAT container 401 a size of about 1700 byte and the supported band combinations a size of up to e.g. 1500 byte.

To reduce the size of the message 400, the UE may, e.g. as measure to be taken in 304, 305, 306 to reduce the size to S1, S2, S3 respectively, omit supported band combinations from the list of supported band combinations 508, i.e. shorten the list of supported band combinations 508 by including less band combinations as supported band combinations in the list of supported band combinations 508.

For downgrading the Release, the UE may, e.g. as measure to be taken in 307, delete information elements of a higher release to downgrade to a lower release. For a downgrade of Release 12 to Release 10 this may only relate to 17 byte (depending on the associated feature set in respect to carrier aggregation it can be more) but with Release 9 the impact is much higher since a lot of carrier aggregation information elements may be or need to be removed. The information removed from the message 400 when downgrading to a lower release may depend on the implementation details.

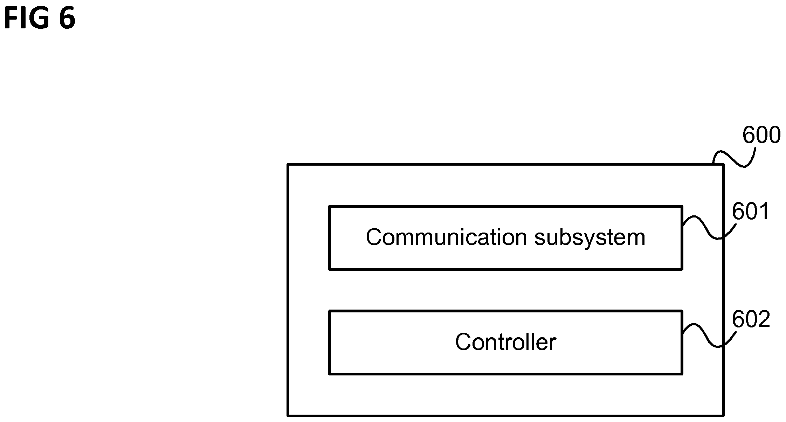

In summary, according to various examples, a communication terminal is provided as illustrated in figure 6.

Figure 6 shows a communication terminal 600.

The communication terminal 600 includes a communication subsystem 601 including a baseband processor and an RF transceiver. Further, the communication terminal 600 includes a controller 602 configured to control the communication subsystem to transmit a request for a first establishment of a connection to a mobile radio communication network and to transmit a first capability message to the mobile radio communication network and configured to, based on whether the first establishment of a connection has failed, control the communication subsystem to transmit a request for a second establishment of a connection to the mobile radio communication network and transmit a second capability message to the mobile radio communication network wherein the second capability message is smaller than the first capability message.

According to various examples, in other words, a communication terminal is configured to retry a connection establishment using a smaller capability message when the connection establishment (including transmission of a larger capability message) has failed. The communication terminal may also, or at an even later retry if the second connection establishment has also failed, reduce the version of the capability message.

It should be noted that the request for the first establishment may have been preceded by one or more other requests for establishments of a communication connection which have failed, i.e. the communication terminal for example starts reducing the size of the capability message after the attach procedure has failed for more than a certain number of times.

For example, a communication terminal, e.g. a user equipment (UE), e.g. operating according to LTE is configured to perform the following:
1) The UE detects an incomplete attach procedure caused by a UE capability message either not received or processed by the network side. For this, the UE may for example check whether the network releases a connection of the UE to the network two seconds after reception of a UE capability enquiry and the UE increments an internal attach incomplete counter (FailCount). If the attach procedure is successful, the UE resets the counter.
2) Depending on the attach incomplete counter the UE reduces the UE capability message size. For this, different variants are possible:
   a) Based on a failure counter (FailCount) value the UE capability message is limited to a maximum size S1, ... ST.
   b) Based on failure counter value UE capability message size is reduced by a reduction factor x (e.g. x= 1/2).
   c) Combination of maximum size and reduction factor.
   A smaller UE capability message to increases the probability that the network receives and accepts the UE capability message to proceed with the attach procedure.
3) In case the network does not accept/receive the UE capability message for multiple consecutive times M, the UE can downgrade the provided ASrelease by one. This downgrade allows addressing the issue that the release used by the UE is beyond the latest release supported by the network and compatibility problems occur.

The communication terminal may detect a failure of the transmission of the capability message based on attach incomplete and a connection release received two seconds after UE capability enquiry as detection parameters. The communication terminal may implement a mechanism to store the events of and/or notify the network side to allow analysis of this issue to increase UE and network stability.

The communication terminal (e.g. the communication subsystem and the controller) may for example be implemented by one or more processors. A "processor" may be understood as any kind of a logic implementing entity, which may be special purpose circuitry or a processor executing software stored in a memory, firmware, or any combination thereof. Thus a "processor" may be a hard-wired logic processor or a programmable logic processor such as a programmable processor, e.g. a microprocessor. A "processor" may also be a processor executing software, e.g. any kind of computer program. Any other kind of implementation of the respective functions which will be described in more detail below may also be understood as a "processor". The communication device may for example be at least partially be implemented by a transceiver may for example be at least partially implemented by a modem (e.g. an LTE modem), a baseband processor or other transceiver components or also by an application processor. The communication terminal may for example be a portable phone and may include typical communication terminal devices such as a transceiver (including e.g. a baseband processor and an RF transceiver such as one or more filters, transmit chains, receive chains, amplifiers etc.), an antenna, a subscriber identity module, an application processor, a memory, a display, a battery, a speaker, a microphone etc.

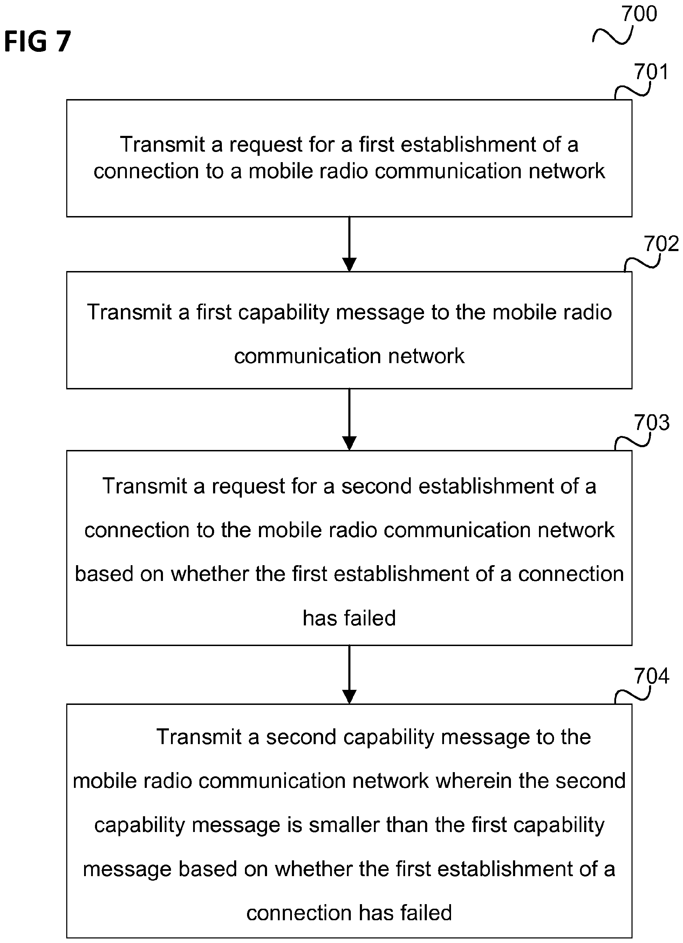

The communication terminal for example carries out a method as illustrated in figure 7.

Figure 7 shows a flow diagram 700 illustrating a method for establishing a connection, for example carried out by a communication terminal.

In 701, the communication terminal transmits a request for a first establishment of a connection to a mobile radio communication network.

In 702, the communication terminal transmits a first capability message to the mobile radio communication network.

Based on whether the first establishment of a connection has failed, the communication terminal transmits a request for a second establishment of a connection to the mobile radio communication network in 703 and transmits a second capability message to the mobile radio communication network wherein the second capability message is smaller than the first capability message in 704.

The following examples pertain to further exemplary implementations.

In Example 1 is a communication terminal as illustrated in figure 6.

In Example 2, the subject-matter of Example 1 may optionally include a detector configured to detect whether the first establishment of a connection has failed.

In Example 3, the subject-matter of any one of Examples 1-2 may optionally include the controller being configured to transmit the request for the second establishment of a connection and transmit the second capability message based on whether the first establishment of a connection has failed due to a failed transmission of the first capability message.

In Example 4, the subject-matter of any one of Examples 1-3 may optionally include a detector configured to detect whether the first establishment of a connection has failed due to a failed transmission of the first capability message wherein the controller is configured to transmit the request for the second establishment of a connection and the second capability message if the first establishment of a connection has failed due to a failed transmission of the first capability message.

In Example 5, the subject-matter of Example 4 may optionally include the detector being configured to detect whether the first establishment of a connection has failed due to a failed transmission of the first capability message based on a time between the transmission of the first capability message and an abort of the first establishment of a connection by the network side.

In Example 6, the subject-matter of Example 5 may optionally include the first establishment of a connection comprising the establishment of a radio connection wherein the controller is configured to control the communication subsystem to transmit the request for the first establishment of a communication connection and the first capability message via the radio connection and the abort of the first establishment of a connection by the network side is a release of the radio connection by the network side.

In Example 7, the subject-matter of any one of Examples 4-6 may optionally include the detector being configured to detect whether the first establishment of a connection has failed due to a failed transmission of the first capability message based on whether the time between the transmission of the first capability message and an abort of the first establishment of a connection by the network side is within a predetermined range expected for the case that the abort of the first establishment of a connection by the network side is due to a failed transmission of the first capability message.

In Example 8, the subject-matter of any one of Examples 1-7 may optionally include the controller being configured to set a size of the second message based on a number of failed transmissions of capability messages to the mobile radio communication network.

In Example 9, the subject-matter of any one of Examples 1-8 may optionally include the first establishment of a connection and the second establishment of a connection being network attach procedures.

In Example 10, the subject-matter of any one of Examples 1-9 may optionally include a message generator configured to generate the first capability message and the second capability message wherein the message generator is configured to generate the second capability message based on omitting information included in the first capability message.

In Example 11, the subject-matter of Example 10 may optionally include the information being omitted including an indication of one or more band combinations supported by the communication terminal.

In Example 12, the subject-matter of any one of Examples 1-11 may optionally include the controller being configured, based on whether the second establishment of a connection has failed, to control the communication subsystem to
transmit a third request for an establishment of a connection to the mobile radio communication network;
transmit a third capability message to the mobile radio communication network wherein the third capability message is smaller than the second capability message.

In Example 13, the subject-matter of any one of Examples 1-12 may optionally include the controller being configured, based on whether the second establishment of a connection has failed, to control the communication subsystem to
transmit a third request for an establishment of a connection to the mobile radio communication network;
transmit a third capability message to the mobile radio communication network wherein the third capability message is formed according to an earlier version of a communication standard then the second capability message.

In Example 14, the subject-matter of Example 13 may optionally include a message generator configured to generate the second capability message and the third capability message wherein the message generator is configured to generate the third capability message based on omitting information included in the second capability message.

In Example 15, the subject-matter of Example 14 may optionally include the information being omitted being information introduced with a later version of the communication standard than the version of the communication standard according to which the third capability message is formed.

In Example 16, the subject-matter of any one of Examples 1-15 may optionally include the communication subsystem being configured to receive a request for the first capability message and the controller being configured to control the communication subsystem to transmit the first capability message in response to the request and wherein, based on whether the first establishment of a connection has failed, the communication subsystem is configured to receive a request for the second capability message and the controller is configured to control the communication subsystem to transmit the second capability message in response to the request.

In Example 17 is a method for establishing a connection as illustrated in figure 7.

In Example 18, the subject-matter of Example 17 may optionally include detecting whether the first establishment of a connection has failed.

In Example 19, the subject-matter of any one of Examples 17-18 may optionally include transmitting the request for the second establishment of a connection and transmitting the second capability message based on whether the first establishment of a connection has failed due to a failed transmission of the first capability message.

In Example 20, the subject-matter of any one of Examples 17-19 may optionally include detecting whether the first establishment of a connection has failed due to a failed transmission of the first capability message wherein the method comprises transmitting the request for the second establishment of a connection and the second capability message if the first establishment of a connection has failed due to a failed transmission of the first capability message.

In Example 21, the subject-matter of Example 20 may optionally include detecting whether the first establishment of a connection has failed due to a failed transmission of the first capability message based on a time between the transmission of the first capability message and an abort of the first establishment of a connection by the network side.

In Example 22, the subject-matter of Example 21 may optionally include the first establishment of a connection comprising the establishment of a radio connection wherein the method comprises transmitting the request for the first establishment of a communication connection and the first capability message via the radio connection and wherein the abort of the first establishment of a connection by the network side is a release of the radio connection by the network side.

In Example 23, the subject-matter of any one of Examples 20-22 may optionally include detecting whether the first establishment of a connection has failed due to a failed transmission of the first capability message based on whether the time between the transmission of the first capability message and an abort of the first establishment of a connection by the network side is within a predetermined range expected for the case that the abort of the first establishment of a connection by the network side is due to a failed transmission of the first capability message.

In Example 24, the subject-matter of any one of Examples 17-23 may optionally include setting a size of the second message based on a number of failed transmissions of capability messages to the mobile radio communication network.

In Example 25, the subject-matter of any one of Examples 17-24 may optionally include the first establishment of a connection and the second establishment of a connection being network attach procedures.

In Example 26, the subject-matter of any one of Examples 17-25 may optionally include generating the first capability message and the second capability message wherein the second capability message is generated based on omitting information included in the first capability message.

In Example 27, the subject-matter of Example 26 may optionally include the information being omitted including an indication of one or more supported band combinations.

In Example 28, the subject-matter of any one of Examples 17-27 may optionally include, based on whether the second establishment of a connection has failed,
transmitting a third request for an establishment of a connection to the mobile radio communication network;
transmitting a third capability message to the mobile radio communication network wherein the third capability message is smaller than the second capability message.

In Example 29, the subject-matter of any one of Examples 17-28 may optionally include, based on whether the second establishment of a connection has failed,
transmitting a third request for an establishment of a connection to the mobile radio communication network;
transmitting a third capability message to the mobile radio communication network wherein the third capability message is formed according to an earlier version of a communication standard then the second capability message.

In Example 30, the subject-matter of Example 29 may optionally include generating the second capability message and the third capability message wherein the third capability message is generated based on omitting information included in the second capability message.

In Example 31, the subject-matter of Example 30 may optionally include the information being omitted being information introduced with a later version of the communication standard than the version of the communication standard according to which the third capability message is formed.

In Example 32, the subject-matter of any one of Examples 17-31 may optionally include receiving a request for the first capability message and controlling the communication subsystem to transmit the first capability message in response to the request and, based on whether the first establishment of a connection has failed, receiving a request for the second capability message and transmitting the second capability message in response to the request.

According to a further example a communication terminal is provided including a processor configured to perform an attach procedure with a mobile communication network including the transmission of a capability message to the mobile communication network, to detect whether the attach procedure was unsuccessful due to a failed reception of the capability message by the mobile communication network and to perform a retry of the attach procedure if the attach procedure was unsuccessful due to a failed reception of the capability message by the mobile communication network including the transmission of a capability message with reduced size or version to the mobile communication network.

It should be noted that one or more of the features of any of the examples above may be combined with any one of the other examples.

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication terminal comprising:
a communication subsystem comprising a baseband processor and an RF transceiver; and
a controller configured to control the communication subsystem to
transmit a request for a first establishment of a connection to a mobile radio communication network; and
transmit a first capability message to the mobile radio communication network; and is configured, based on whether the first establishment of a connection has failed,
to control the communication subsystem to
transmit a request for a second establishment of a connection to the mobile radio communication network; and
transmit a second capability message to the mobile radio communication network wherein the second capability message is smaller than the first capability message.

2. The communication terminal of claim 1, comprising a detector configured to detect whether the first establishment of a connection has failed.

3. The communication terminal of claim 1 or 2, wherein the controller is configured to transmit the request for the second establishment of a connection and transmit the second capability message based on whether the first establishment of a connection has failed due to a failed transmission of the first capability message.

4. The communication terminal of any one of claims 1 to 3, comprising a detector configured to detect whether the first establishment of a connection has failed due to a failed transmission of the first capability message wherein the controller is configured to transmit the request for the second establishment of a connection and the second capability message if the first establishment of a connection has failed due to a failed transmission of the first capability message.

5. The communication terminal of claim 4, wherein the detector is configured to detect whether the first establishment of a connection has failed due to a failed transmission of the first capability message based on a time between the transmission of the first capability message and an abort of the first establishment of a connection by the network side.

6. The communication terminal of claim 5, wherein the first establishment of a connection comprises the establishment of a radio connection, wherein the controller is configured to control the communication subsystem to transmit the request for the first establishment of a communication connection and the first capability message via the radio connection and the abort of the first establishment of a connection by the network side is a release of the radio connection by the network side.

7. The communication terminal of any one of claims 4 to 6, wherein the detector is configured to detect whether the first establishment of a connection has failed due to a failed transmission of the first capability message based on whether the time between the transmission of the first capability message and an abort of the first establishment of a connection by the network side is within a predetermined range expected for the case that the abort of the first establishment of a connection by the network side is due to a failed transmission of the first capability message.

8. The communication terminal of any one of claims 1 to 7, wherein the controller is configured to set a size of the second message based on a number of failed transmissions of capability messages to the mobile radio communication network.

9. The communication terminal of any one of claims 1 to 8, wherein the first establishment of a connection and the second establishment of a connection are network attach procedures.

10. The communication terminal of any one of claims 1 to 9, comprising a message generator configured to generate the first capability message and the second capability message wherein the message generator is configured to generate the second capability message based on omitting information included in the first capability message.

11. The communication terminal of claim 10, wherein the information being omitted includes an indication of one or more band combinations supported by the communication terminal.

12. The communication terminal of any one of claims 1 to 11, wherein the controller is configured, based on whether the second establishment of a connection has failed, to control the communication subsystem to
transmit a third request for an establishment of a connection to the mobile radio communication network;
transmit a third capability message to the mobile radio communication network wherein the third capability message is smaller than the second capability message.

13. The communication terminal of any one of claims 1 to 12, wherein the controller is configured, based on whether the second establishment of a connection has failed, to control the communication subsystem to
transmit a third request for an establishment of a connection to the mobile radio communication network;
transmit a third capability message to the mobile radio communication network wherein the third capability message is formed according to an earlier version of a communication standard then the second capability message.

14. The communication terminal of claim 13, comprising a message generator configured to generate the second capability message and the third capability message wherein the message generator is configured to generate the third capability message based on omitting information included in the second capability message.

15. Method for establishing a connection comprising:
transmitting a request for a first establishment of a connection to a mobile radio communication network;
transmitting a first capability message to the mobile radio communication network; and, based on whether the first establishment of a connection has failed,
transmitting a request for a second establishment of a connection to the mobile radio communication network; and
transmitting a second capability message to the mobile radio communication network wherein the second capability message is smaller than the first capability message.
